# EUROPÄISCHE PATENTSCHRIFT

(11) **EP 0 800 641 B1**
(45) Veröffentlichungstag und Bekanntmachung des Hinweises auf die Patenterteilung: **08.12.1999**
(21) Anmeldenummer: 96900233.6
(22) Anmeldetag: 16.01.1996
(51) Int. Cl.: F28D 5/00, F28G 1/16

(54) **VERFAHREN ZUM KÜHLEN UND REINIGEN DER FLÄCHENELEMENTE EINES PLATTENWÄRMEAUSTAUSCHERS UND PLATTENWÄRMEAUSTAUSCHER MIT EINER BENETZUNGSEINRICHTUNG**
METHOD FOR COOLING AND CLEANING THE PLATES OF A PLATE HEAT EXCHANGER AND A PLATE HEAT EXCHANGER WITH A WETTING DEVICE
PROCEDE POUR REFROIDIR ET NETTOYER LES PLAQUES D'UN ECHANGEUR DE CHALEUR ET ECHANGEUR DE CHALEUR A PLAQUES POURVU D'UN DISPOSITIF DE MOUILLAGE

(30) Priorität: 20.01.1995 CH 16495
(43) Veröffentlichungstag der Anmeldung: 15.10.1997
(73) Patentinhaber: POLYBLOC AG, 8404 Winterthur (CH)
(72) Erfinder: BACHOFEN, Friedrich, CH-8353 Elgg (CH)
(74) Vertreter: Patentanwälte Breiter + Wiedmer AG
(86) Internationale Anmeldenummer: CH9600019
(87) Internationale Veröffentlichungsnummer: WO9622497

(56) Entgegenhaltungen:
- EP-A- 0 117 554
- WO-A-92/04589
- DE-A- 3 504 614
- US-A- 4 272 462

## Beschreibung

Die Erfindung bezieht sich auf ein Verfahren zum Kühlen und Reinigen der Flächenelemente eines Plattenwärmeaustauschers zur Rückgewinnung von Abluftwärme durch Sprühen von Wasser in einen Abluftstrom. Weiter betrifft die Erfindung eine Benetzungseinrichtung zur Durchführung des Verfahrens.

Zur Klimatisierung von Wohn-, Arbeits- und Lagerräumen sowie von temperaturempfindlichen Objekten werden je nach Empfindlichkeitsstufe Heiz- und/oder Kühlanlagen eingesetzt, welche jedoch nicht nur zum Heizen, sondern auch zum Kühlen einen verhältnismässig hohen Energieverbrauch verursachen. Im Rahmen zunehmend scharfer ökologischer Rahmenbedingungen, gepaart mit steigenden Energiekosten, hat das Recyclingprinzip auch auf diesem Gebiet Einzug gehalten. Die Abluft wird je nach Jahreszeit zum Vorkühlen oder -wärmen der Aussenluft eingesetzt. Zur Erzielung eines möglichst hohen Wirkungsgrades werden die beiden Luftströme bei strikter Trennung mit möglichst grossen Austauschflächen durch einander hindurchgeführt. Die dazu häufig eingesetzten Plattenwärmeaustauscher arbeiten nach dem Gegenstromprinzip oder bevorzugt nach dem Kreuzstromprinzip.

Ein Plattenwärmeaustauscher für Lüftungsanlagen wird beispielsweise in der EP,A2 0449783 beschrieben. Dieser Wärmeaustauscher besteht aus mittels eingelegter oder ausgeformter Distanzhalter in Abstand aufeinandergestapelten, formgleichen Flächenelementen. Dieser Kreuzstromwärmeaustauscher erlaubt dank der dünnen Flächenelemente und der in der Regel nur etwa 0,2 - 1,5 cm breiten Zwischenräume eine wirkungsvolle Wärmeübertragung der beiden sich kreuzenden Luftströme. Die beispielsweise etwa 0,1 - 0,5 mm dicken Folien bestehen vorzugsweise aus einem die Wärme gut leitenden Metall, wie Aluminium oder Stahl, jedoch auch aus mechanisch festem Kunststoff oder einem Verbundwerkstoff.

Es ist an sich bekannt, die Abkühlung der in einen Plattenwärmeaustauscher eingeleiteten Aussenluft durch die Einwirkung von Leitungswasserdüsen zu verbessern. Die Besprühung erfolgt bevorzugt auf der Ablufteintrittsseite. Ein Sprühkegel ist auf die Flächenelemente gerichtet, das Sprühwasser tropft auf der Austrittsseite der Abluft ab, wird aufgefangen und in der Regel in einem Kreislaufsystem zurückgepumpt. Durch Wärmekonvektion und teilweise Verdunstung des Wassers werden die Flächenelemente gekühlt. Dem auf der anderen Seite der Flächenelemente kreuzenden Aussenluftstrom kann so Wärme entzogen werden, ohne dass dessen Feuchtigkeitshaushalt beeinflusst wird.

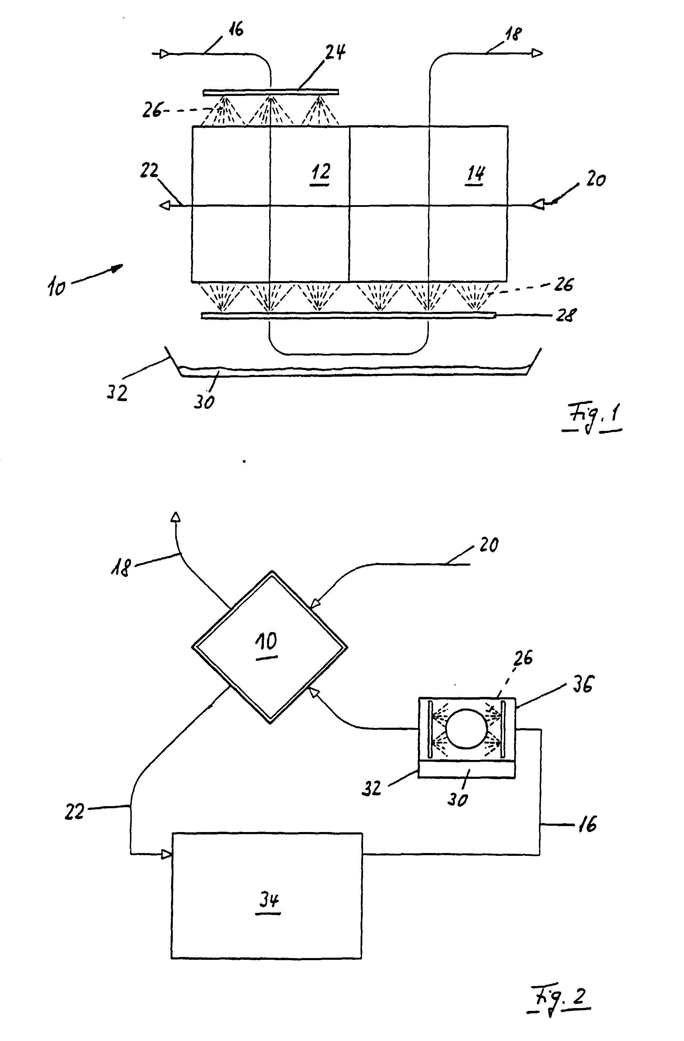

In Fig. 1 ist eine schematische Ansicht eines bekannten Plattenwärmeaustauschers 10 mit vertikal gestellten, parallelen Flächenelementen dargestellt, welcher zwei Blöcke 12,14 umfasst. Der Abluftstrom 16 wird vorerst durch den Block 12, dann durch den Block 14 geleitet, aus welchem er als Fortluftstrom 18 austritt. Auf der Eintrittsseite des Abluftstroms 16 ist eine Düsenleiste 24 mit drei einfachheitshalber nicht dargestellten Düsen angeordnet, welche je einen Sprühkegel 26 in die Eintrittsschlitze des Elementes 12 sprühen. Auf einer weiteren, gegenüberliegenden Düsenleiste 28 sind drei im Bereich des Elements 12 gegen den Luftstrom sprühende Düsen und drei im Bereich des Elements 14 in Richtung des Luftstroms sprühende Düsen angeordnet. Das permanent mit starkem Ueberschuss in den Plattenwärmeaustauscher 10 gesprühte Wasser 30 tropft in eine Auffangwanne 32 ab. Mit einem nicht dargestellten Rohr- oder Schlauchsystem kann das Wasser 30 in die fest montierten Düsenleisten 24,28 zurückgepumpt, ggf. nach einer Reinigung, oder dem Abwasser zugeführt werden. Dieses Kühlsystem braucht viel Leitungswasser und ist aufwendig zu betreiben.

In Fig. 2 ist ein Kühlsystem schematisch dargestellt, welches einen Plattenwärmeaustauscher 10 mit einem einzigen Block umfasst. Der aus einem Raum 34 abgeführte Abluftstrom 16 wird durch ein Befeuchtungssystem 36 mit mehreren Sprühkegeln 26 geführt. Der befeuchtete Abluftstrom 16 wird beispielsweise von 25 auf 19°C abgekühlt. Da der im Plattenwärmeaustauscher 10 kreuzende Aussenluftstrom 20 wärmer ist, bleiben die Flächenelemente im Tauscher trocken.

Die EP,A1 0117554 beschreibt eine Wärmepumpe zum Entnehmen von Wärme aus Wasser, welche wenigstens einen von einem Kältemittel durchströmten Verdampfer aufweist. Dem aus einer Rieselwanne ausfliessenden und entlang der Verdampferplatten herunterlaufenden Wasserfilm wird durch einen gleichmässigen inneren Kältemittelstrom Wärme entzogen. Die Verdampferplatten werden nach einer bevorzugten Ausführungsform in regelmässigen Zeitabständen gereinigt, indem sie mittels einer Aneisungsvorrichtung vorübergehend durch Erhöhen der Kühlleistung mit einer Eisschicht überzogen und dann durch Erniedrigen oder Ausschalten der Kühlleistung wieder abgetaut werden. Die im Wasserstrom auftauende Eisschicht bewirkt eine wirksame Reinigung der Verdampferplatten.

Der Erfindung liegt die Aufgabe zugrunde, ein Verfahren und eine Vorrichtung der eingangs genannten Art zu schaffen, bei welchen der Wirkungsgrad des eingesetzten Kühlwassers erhöht wird. Weiter soll der Plattenwärmeaustauscher mit der gleichen Vorrichtung gereinigt werden können.

Die Aufgabe wird erfindungsgemäss gelöst durch ein Verfahren zum Kühlen und Reinigen der Flächenelemente eines Plattenwärmeaustauschers zur Rückgewinnung von Abluftwärme mittels Benetzungsdüsen, welche in gleichen Zeitintervallen stromauf einen feinen Sprühstahl von aufbereitetem Wasser in die Abluft-Strömungskanäle des Plattenwärmeaustauschers sprühen, wobei kein aufgesprühtes Wasser abtropft und die abluftbestrichenen Flächenelemente bis zum nächsten Besprühen feucht bleiben, und mittels Ausschwemmdüsen, welche am Ende einer täglichen Kühlperiode stromauf einen Sprühstrahl von Leitungswasser in die Abluft-Strömungskanäle des Plattenwärmeaustauschers sprühen. Spezielle und weiterbildende Ausführungsformen des Verfahrens sind Gegenstand von abhängigen Patentansprüchen.

Die Benetzungs- und Ausschwemmdüsen werden mit konstanter oder regelbarer Geschwindigkeit über alle Eintrittsschlitze der Abluft-Strömungskanäle des Plattenwärmeaustauschers geführt, weshalb sie auch Wanderdüsen genannt werden. Nach einem bestimmten Zeitintervall werden diese Wanderdüsen vorzugsweise wiederum mit der gleichen konstanten Geschwindigkeit und in derselben Richtung über die erwähnten Eintrittsschlitze geführt. Die pro Oberflächeneinheit in Richtung des Luftstroms zugeführte Wassermenge kann zweckmässig durch die Geschwindigkeit der Wanderdüsen geregelt werden, auch in Kombination mit Dosierventilen. Die aufgesprühte spezifische Wassermenge hängt von der Aufnahmefähigkeit der bestrichenen Flächenelementen ab. Das Zeitintervall bis zum nächsten Durchgang der als Benetzungsdüsen bezeichneten durchsatzschwachen Wanderdüsen hängt von der Trocknungszeit des von den Flächenelementen aufgenommenen Wassers ab. Die Flächenelemente müssen vor dem nächsten Düsendurchlauf noch eine Restfeuchtigkeit aufweisen. Durch Berechnungen und/oder Eichmessungen können die optimalen Werte ermittelt und aufgezeichnet werden.

Als besonders günstig haben sich Plattenwärmeaustauscher gemäss der bereits erwähnten EP,A2 0449783 erwiesen. Durch die Kapillarwirkung wird zwischen den Flächenelementen und den Wellbändern Wasser gespeichert, wodurch eine längere Aufrechterhaltung einer Restfeuchtigkeit ermöglicht wird:

Weil das den Benetzungsdüsen zugeführte Wasser in so geringer Menge dosiert wird, dass es nicht abtropft, muss es aufbereitet sein. Dabei können alle an sich bekannten Verfahren zur Wasseraufbereitung angewendet werden, gängigste Verfahren sind das Enthärten, Entsalzen oder Entionisierung mit einem Ionentauscher. Derart können Mineralansammlungen auf einem Flächenelement auf ein Minimum beschränkt werden.

Erfindungsgemäss erfolgt also die Zusatzkühlung durch Besprühen mit Wasser ausschliesslich durch Verdunstungswärme, welche den Flächenelementen und dadurch dem auf der anderen Seite angrenzenden Aussenluftstrom entzogen wird.

Sowohl beim Benetzen als auch beim Ausschwemmen ist es von Vorteil, wenn die Wassertröpfchen mit möglichst grossem Anteil direkt auf die Flächenelemente geschleudert werden. Durch den in einen Strömungskanal des Tauschers eintretenden Sprühstrahl entstehen derart heftige Turbulenzen, dass auch hinter dem direkten Sprühstrahl eine gute Benetzungs- oder Ausschwemmwirkung erfolgt. Die Wirkung kann durch die geometrische Gestaltung des Sprühstrahls bedeutend erhöht werden, bestens geeignet ist ein Flachstrahl, welcher die Wassertröpfchen gleichmässig und konzentriert in die überfahrenen Abluft-Strömungskanäle des Plattenwärmeaustauschers bringt. Je nach der eingesetzten Flachstrahldüse liegt der Spritzwinkel in der Regel zwischen 25 und 130°. Je kleiner der Spritzwinkel einer Flachstrahldüse ist, desto grösser wird der benötigte Abstand für eine vollständige Flächenüberdeckung durch die linear angeordneten Düsen.

Die vorstehend diskutierte spezifische Wassermenge, welche zur Feuchthaltung der Flächenelemente benötigt wird, kann nach den der Erfindung zugrundeliegenden Ausführungsbeispielen bei einem Spritzwinkel von etwa 110° und einem Druck von 3 bar im Bereich von 0,1 - 1 1/min liegen. Mit Blick auf den für den gesamten Plattenwärmeaustauscher benötigten Volumenstrom von aufbereitetem Benetzungswasser wird der äquivalente Bohrungsdurchmesser der Flachstrahldüse gewählt und der angewendete Druck für das Sprühwasser eingestellt. Der angewendete Druck liegt in der Regel im Bereich von 1 - 10 bar, kann jedoch insbesondere beim Benetzen weiter erhöht werden. Beim täglichen Ausschwemmen der Mineralansammlungen mit den ebenfalls vorzugsweise als Flachstrahldüsen ausgebildeten leistungsstarken Wanderdüsen liegt der Volumenstrom an Leitungswasser zweckmässig im Bereich von 2 - 10 l/min.

Das Benetzungswasser wird vorzugsweise mit einem Zeitintervall von 2 - 15 min, insbesondere von 5 - 10 min, aufgesprüht. Dies hängt wie erwähnt ab von der Aufnahmekapazität der Flächenelemente für aufbereitetes Wasser, aber auch vom pro Zeiteinheit durchfliessenden Abluftstrom, dessen Kontaktzeit mit den Flächenelementen, dessen Temperatur und dessen relativer Feuchte.

Nach jeder Kühlperiode, z.B. einem Hitzetag, werden die Ausschwemmdüsen eingeschaltet und mehrmals über den Plattenwärmeaustauscher geführt, in der Praxis meist 5 - 10 mal bei dauernd eingeschalteten Düsen. Das Ausschwemmen erfolgt zweckmässig automatisch nach dem Abschalten der Benetzungsdüsen. Bei sehr langen Kühlperioden oder einem Dauerbetrieb erfolgt das Einschalten der Ausschwemmdüsen, welche auch gleichzeitig mit den Benetzungsdüsen arbeiten können, beispielsweise alle sechs, acht oder zwölf Stunden, vorzugsweise von einem Prozessor oder Mikroprozessor gesteuert.

Der Wirkungsgrad des Ausschwemmens kann erhöht werden, indem erwärmtes Leitungswasser, beispielsweise mit einer Temperatur von 60°C, aufgesprüht wird.

Zwangsläufig erfolgt beim Ausschwemmen von Mineralansammlungen auch eine Reinigung von aus der Abluft abgeschiedenen Verunreinigungen. Vorteilhaft wird deshalb dem Leitungswasser für die Ausschwemmdüsen von Zeit zu Zeit ein alkalifreies, an sich bekanntes Waschmittel zugegeben, beispielsweise bei jedem dritten, sechsten oder zehnten Arbeitszyklus, je nach Verunreinigungsgrad der Abluft.

Die Ausschwemmdüsen können auch in Perioden ohne Kühlung von Zeit zu Zeit eingeschaltet werden und ausschliesslich der Reinigung dienen.

Sowohl für Benetzungs- als auch für Ausschwemmdüsen ist es vorteilhaft, wenn der flache Sprühstrahl beide Flächenelemente eines Strömungskanals etwa gleich stark beaufschlagt. Dies ist der Fall, wenn die Längsmittelebene des flachen Sprühstrahls parallel zu den Flächenelementen verläuft.

Die Aufnahmefähigkeit der Flächenelemente für aufbereitetes Benetzungswasser kann generell erhöht werden, indem diese aufgerauht und/oder mit einer hydrophilen Beschichtung versehen sind, welche die Wasseraufnahme erhöht. Wahlweise kann die Beschichtung auch hygroskopischer Natur sein, bei welcher die Beschichtung in dem Fachmann ebenfalls bekannter Weise eine reversible chemische Reaktion mit dem Benetzungswasser eingeht. Bei Flächenelementen aus Aluminium oder einer Aluminiumlegierung erfolgt das Aufrauhen bevorzugt durch Aetzen, die Aufnahmekapazität an Benetzungswasser kann anschliessend mit einem hydrophilen Lack verbessert werden.

In bezug auf die Benetzungseinrichtung zur Durchführung des Verfahrens wird die Aufgabe erfindungsgemäss dadurch gelöst, dass die Benetzungseinrichtung eine hin- und herbewegbare Düsenleiste mit den senkrecht zu ihrer Bewegungsebene angeordneten Benetzungs- und Ausschwemmdüsen, separate Speiseleitungen für die beiden Düsensysteme, Führungsmittel und ein Antriebsorgan für die Düsenleiste umfasst, wobei Mittel zur Betätigung und Regelung der Wasserzufuhr vorgesehen sind. Spezielle und weiterbildende Ausführungsbeispiele sind Gegenstand von abhängigen Patentansprüchen.

Neben einer konstruktiv wesentlich vereinfachten Gestaltung erlaubt eine gemeinsame Düsenleiste für Benetzungs- und Ausschwemmdüsen, auch Doppeldüsenstock genannt, dass Benetzungs- und Ausschwemmdüsen optimal angeordnet werden können. Die Längsmittelebene von deren Sprühstral, insbesondere einem Flachsprühstrahl, verläuft parallel zu den Flächenelementen des Plattenwärmeaustauschers. Mit getrennten Düsenleisten ist dies nicht möglich, die Benetzung der Flächenelemente ist wegen Schrägstellung der Düsen ungleichmässig.

Die Achsen der Benetzungs- und Ausschwemmdüsen einer Doppeldüsenleiste sind bevorzugt auf einer gemeinsamen Ebene angeordnet. Die Anordnung der vorzugsweise als Flachstrahldüsen ausgebildeten Benetzungs- und Ausschwemmdüsen kann jedoch auch auf zwei eng benachbarten Parallelebenen der gleichen Doppeldüsenleiste erfolgen.

Die Benetzungsdüsen haben zweckmässig einen äquivalenten Bohrungsdurchmesser von 0,5 - 0,8 mm, die Ausschwemmdüsen einen solchen von 1,3 - 2 mm. Beide Düsentypen sind vorzugsweise mit einem Aussengewinde ausgerüstet und können einzeln im Düsenleiste verschraubt werden.

Die Benetzungsdüsen können auch als Luft-Wasserdüsen (Luftzerstäuberdüsen) oder luftfrei arbeitende Hochdruckzerstäuberdüsen an sich bekannter Bauart ausgebildet sein.

Die erfindungsgemässe Benetzungseinrichtung weist neben der Doppeldüsenleiste noch weitere bevorzugte konstruktive Merkmale auf:
- Die Hin- und Herbewegung der Düsenleiste erfolgt nicht mit Endschaltern, welche die Bewegungsrichtung eines Antriebsorgans umkehren, sondern durch ein kontinuierlich umlaufendes Antriebsorgan mit einem Mitnehmer für die Vorwärts- und Rückwärtsbewegung.
- Mit einem vorzugsweise mechanisch betätigten Wasserventil werden die Benetzungsdüsen beim Rücklauf der Doppeldüsenleiste geschlossen gehalten. Dank der ausschliesslichen Benetzung beim Vorlauf der Doppeldüsenleiste sind die Benetzungsintervalle für alle Abluft-Strömungskanäle des Plattenwärmeaustauschers gleich.
- Ein Temperaturfühler in der Zuluft schaltet das Benetzungssystem nur ein, wenn eine minimale Temperatur überschritten wird. In der kalten Jahreszeit, bei manuell oder automatisch dauernd ausgeschalteter Benetzung, kann der Plattenwärmeaustauscher ein Vorwärmen der Aussenluft bewirken.

Die spezifischen Vorteile der Erfindung können wie folgt zusammengefasst werden:
- Die Flächenelemente in den Abluft-Strömungskanälen des Plattenwärmeaustauschers werden periodisch ohne abtropfendes Wasser benetzt.
- Das Kühlen erfolgt zum grössten Teil durch Verdunstungswärme.
- Benetzungs- und Ausschwemmdüsen können auf einer Doppeldüsenleiste angeordnet werden, was konstruktive Vorteile und eine vereinfachte, kostengünstigere Betriebsweise bei gleichmässiger Benetzung der Flächenelemente erlaubt.
- Das Konstruktionsprinzip mit der Doppeldüsenleiste erlaubt ein kontinuierlich umlaufendes Antriebsorgan mit einer mechanisch gesteuerten Ausschaltung der Einspeisung von Benetzungswasser im Rücklauf.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 3 eine Prinzipskizze einer Verdunstungskühlung,
- Fig. 4 eine perspektivische Darstellung einer durchsatzschwachen Benetzungsdüse,
- Fig. 5 eine perspektivische Darstellung einer durchsatzstarken Ausschwemmdüse,
- Fig. 6 eine perspektivische Darstellung eines Plattenwärmeaustauschers mit Benetzungseinrichtung,
- Fig. 7 eine teilweise aufgeschnittene Ansicht einer Doppeldüsenleiste,
- Fig. 8 eine Prinzipskizze von Antrieb und mechanischem Schaltsystem einer Doppeldüsenleiste, und
- Fig. 9 den Feuchtigkeitshaushalt eines Flächenelementes.

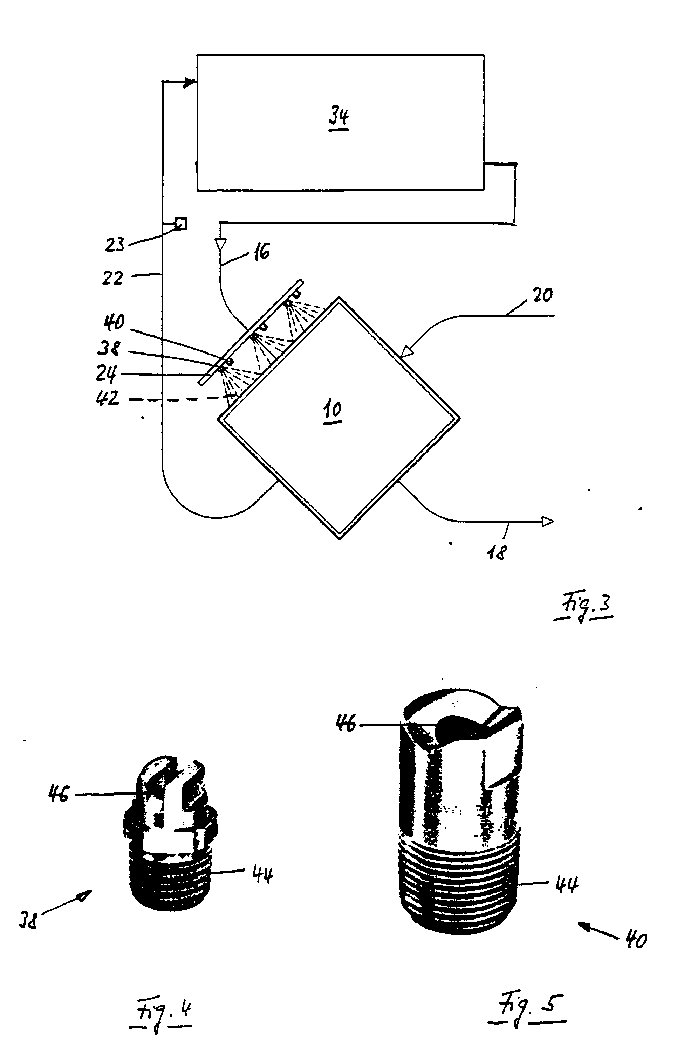

In der Prinzipskizze nach Fig. 3 tritt ein Aussenluftstrom 20 durch einen Plattenwärmeaustauscher, welcher in der EP,A2 0449783 im Detail dargestellt ist. Nach der Abkühlung von z.B. 32°C auf etwa 22°C wird er zum Zuluftstrom 22, welcher in einen zu kühlenden Raum 34 einfliesst. Nach einiger Zeit, beispielsweise etwa 5-10 min, hat die Zuluft den Raum 34 durchquert und wird als erwärmter Abluftstrom 16 mit einer Temperatur von etwa 26°C dem Plattenwärmeaustauscher 10 zugeführt. Der Abluftstrom 16 tritt bezüglich des Aussenluftstroms 20 kreuzstromförmig in den Plattenwärmeaustauscher 10 ein und verlässt diesen als auf etwa 25°C erwärmten Fortluftstrom 18. Mit Flachstrahldüsen geringer Leistung, den Benetzungsdüsen 38, wird aufbereitetes Wasser in die Eintrittsöffnungen des Plattenwärmeaustauschers 10 gespritzt. Drei Flachstrahldüsen grosser Leistung, die Ausschwemmdüsen 40, sind ausser Betrieb. Die Doppeldüsenleiste 24 wandert stromauf entlang der Eintrittsseite für den Abluftstrom 16. Dabei wird der sich in Richtung der Flächenelemente erstreckende Flachstrahl 42 aufgespritzt.

Die beiden in Fig. 4 und 5 dargestellten Flachstrahldüsen 38,40 haben beide ein Aussengewinde 44 zum Einschrauben in der Düsenleiste 24. Der äquivalente Durchmesser für die Bohrung 46 der durchsatzschwachen Benetzungsdüse 38 liegt bei 0,6 mm, diejenige der durchsatzstarken Ausschwemmdüse 40 bei 1,5 mm. Der Plattenwärmeaustauscher 10 mit angeflanschter Benetzungseinrichtung 48 umfasst einen einzigen Block 12. Der Plattenwärmeaustauscher wird durch das Besprühen zur Benetzungseinrichtung. Sinngemäss kann sich die auf der Eintrittsseite des Abluftstroms 16 angeordnete Benetzungseinrichtung 48 auch über mehrere Blöcke 12 erstrecken.

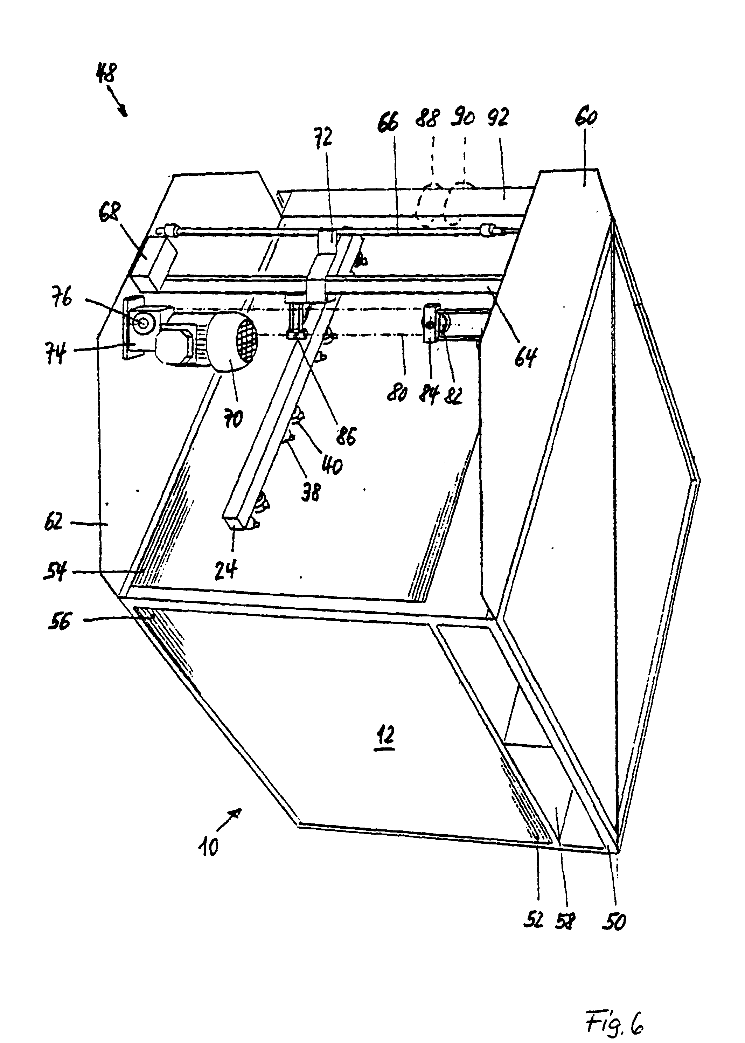

Der von einem Rahmen 50 umfasste, im wesentlichen quaderförmige Block 12 gemäss Fig. 6 besteht aus mittels eingelegter oder ausgeformter Distanzhalter in Abstand aufeinander gestapelten, formgleichen Flächenelementen 52, welche lediglich angedeutet sind. Diese Flächenelemente 52 sind zur Bildung von Anströmungsquerschnitten auf den einander gegenüberliegenden Seiten zweimal in gleicher Richtung rechtwinklig abgekantet und jeweils um 90° zueinander gedreht. Die abgekanteten Schenkel umgreifen das nächstliegende Flächenelement. Jeweils zwei benachbarte Flächenelemente 52 bilden einen Strömungskanal 54 für die Abluft oder einen Strömungskanal 56 für die Aussenluft. Die sich kreuzenden Strömungskanäle 54, 56 sind, wie aus den vorstehenden Ausführungen hervorgeht, alternierend angeordnet und für den jeweils anderen Luftstrom geschlossen. Dank der dünnen, grossen Flächenelemente und den schmalen Strömungskanälen 54, 56 ist ein sehr guter Wärmeaustausch gewährleistet. Für Details betreffend den Plattenwärmeaustauscher 10 wird nochmals auf die EP,A2 0449783 verwiesen.

Der Rahmen 50 für das Element 12 mit einem Deckblech 58 zum Schutz des äussersten Flächenelementes 52 ist für die Montage der Benetzungseinrichtung 48 verbreitert ausgebildet. Die Konstruktionselemente der Benetzungseinrichtung 48 sind an Seitenblechen 60, 62 befestigt.

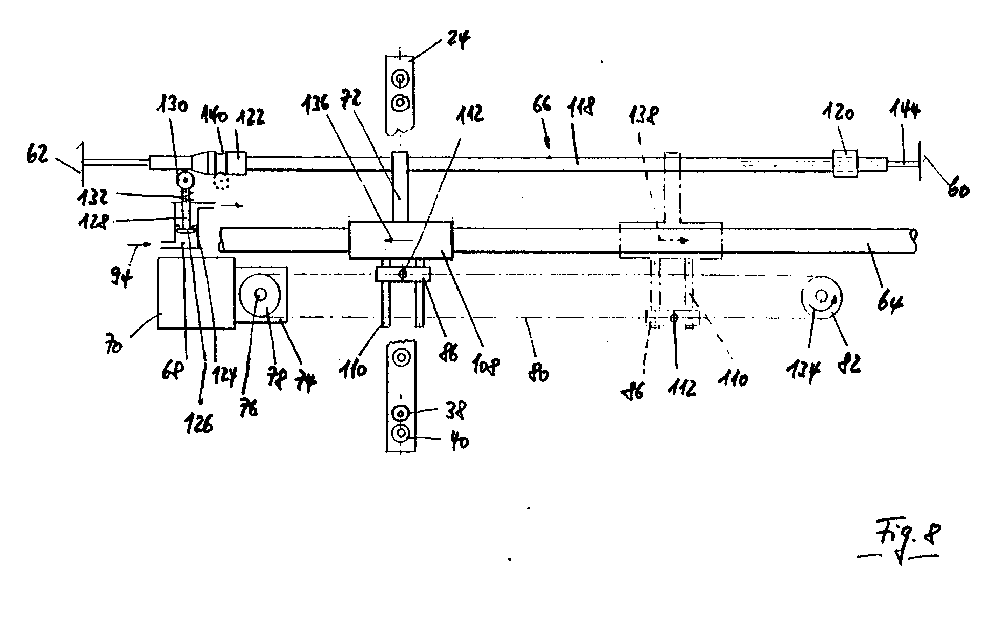

Zwischen den beiden Seitenblechen 60,62 verläuft ein Führungsprofil 64 für die Düsenleiste 24 und eine später im Detail erklärte Schaltstange 66 für ein stationäres Wasserventil 68. Auf einem Seitenblech 62 ist ein staubdichter Elektromotor 70 und ein Getriebe 74 mit einer auf eine Antriebsrolle 78 einwirkenden Antriebswelle 76 (Fig. 8) montiert. Dieses versetzt ein flexibles Antriebsorgan 80, im vorliegenden Fall eine Kette, in eine kontinuierliche Umlaufbewegung. Das Antriebsorgan 80 wird von einer frei drehbaren Umlenkrolle 82 gespannt, welche über eine Aufhängung 84 am Führungsprofil 64 befestigt ist. Am Antriebsorgan 80 ist ein Gleitstück 86 fixiert, welches die Bewegung des Antriebsorgans 80 als Hin- und Herbewegung auf die Düsenleiste 24, den Doppeldüsenstock, überträgt. Weitere Details sind aus Fig. 8 ersichtlich.

Wasserzufuhrschläuche 88,90 für die Speisung der Benetzungsdüsen 38 mit aufbereitetem Wasser und der Ausschwemmdüsen 40 mit Leitungswasser sind, wie gestrichelt angedeutet, spiralförmig um eine vertikale Führung 92 gewickelt und können daher problemlos der Auf- und Abbewegung der Düsenleiste 24 folgen. Wahlweise können die Wasserzufuhrschläuche 88,90 auch um je eine Führung 92 gewickelt sein, mit ineinanderlaufenden Schlauchspiralen.

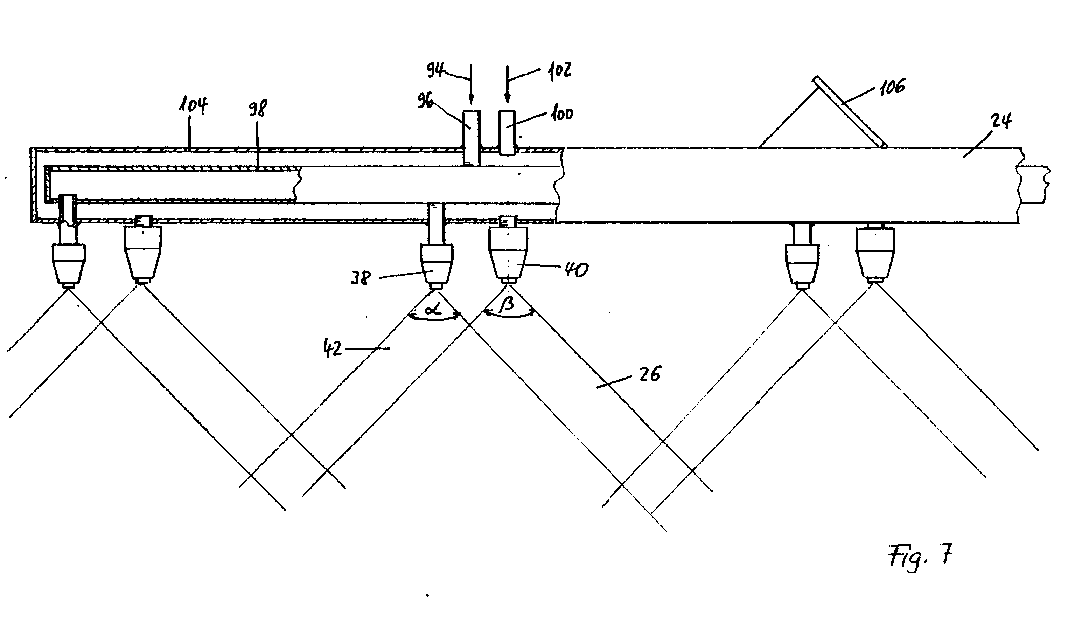

Die in Fig. 7 dargestellte, teilweise aufgeschnitte Düsenleiste 24 zeigt insbesondere die Wasserversorgung der Benetzungsdüsen 38 und der Ausschwemmdüsen 40. Das aufbereitete.Wasser, durch Pfeil 94 charakterisiert, wird über einen Zufuhrstutzen 96 in ein beidends verschlossenes Innenrohr 98 geleitet. Von dort tritt das aufbereitete Wasser durch die Benetzungsdüsen 38 aus und bildet einen flachen Sprühstrahl 42 mit einem Spritzwinkel a von etwa 90°.

Ueber einen weiteren Zufuhrstutzen 100 tritt bei eingeschaltetem Wasserventil am Ende einer Kühlperiode Leitungswasser, charakterisiert durch einen Pfeil 102, in das Aussenrohr 104 der Düsenleiste 24. Dieses ist ebenfalls beidends stirnseitig verschlossen, wobei die Stirnwände von Innenund Aussenrohr auch gemeinsam ausgebildet sein können. Das Leitungswasser tritt über die Ausschwemmdüsen 40 aus und bildet einen als Flachstrahl ausgebildeten Sprühstrahl 26 mit einem Spritzwinkel β von ebenfalls etwa 90°. Der Einfachheit halber sind in Fig. 7 beide Sprühkegel 26,42 eingezeichnet, obwohl diese in der Regel einzeln eingeschaltet sind.

Anstelle eines Innen- und eines Aussenrohres 98,104 können in der Düsenleiste 24 auch zwei parallel nebeneinanderliegende Rohre ausgebildet sein, wobei die Düsenanordnung unverändert bleibt.

Die Düsenleiste 24 wird über einen Befestigungsflansch 106 an einem hin- und herbewegbaren Führungsschlitten 108 gehaltert. Wie in Fig. 8 dargestellt, gleitet oder rollt dieser entlang des im vorliegenden Fall als runde Stange ausgebildeten Führungsprofils 64. Nach einer Variante kann der Führungsschlitten 108 anstelle einer Gleitfläche mehrere Rollen aufweisen, dann wird von einem Führungswagen gesprochen. In Richtung des flexiblen Antriebsorgans 80, einer Kette, weist der Führungsschlitten 108 zwei rechtwinklig abkragende, gabelförmig ausgebildete Gleitstangen 110 auf. Diese durchgreifen entsprechende Bohrungen des Gleitstücks 86, welches über einen Mitnehmer 112, einer Schwenkachse, gelenkig mit der Kette verbunden ist.

Die Schaltstange 66 umfasst eine Aussenhülse 118, welche auf einer an den Blechen 60,62 befestigten Haltestange 144 längsverschiebbar ist.

Mit der Aussenhülse 118 der Schaltstange 66 fest verbunden ist ein rechter und ein linker Anschlagring 120,122 für einen Nocken 72, welcher gleichzeitig Verdrehsicherung für den Führungsschlitten 108 sein kann. Der linke Anschlagring 122 ist auch mechanisches Steuerungsorgan für das fest montierte Wasserventil 68 des mit einem Pfeil 94 dargestellten aufbereiteten Wassers. Im rohrförmig ausgebildeten Ventilgehäuse ist ein ringförmiger Ventilsitz 124 ausgebildet, auf welchem in Schliessstellung ein Ventilteller 126 aufliegt. Dieser ist über einen Ventilstössel 128 mit einem Ventilrad 130 verbunden, welches beim Verschieben der Schaltstange auf dem unteren Anschlagring 122 aufliegt. Eine Spiralfeder 132 hält das Wasserventil 68 bei unbelastetem Ventilstössel 128 in Schliessstellung.

Wie durch die gleichlaufenden Pfeile 134,136 angedeutet, wird gemäss Fig. 8 die Düsenleiste 24 nach links verschoben. Das in Richtung des Pfeils 134 drehende flexible Antriebsorgan 80 überträgt die ausgeübte Kraft über den Mitnehmer 112 des Gleitstücks 86 auf die Gleitstangen 110 des Führungsschlittens 108. Ueber den Befestigungsflansch 106 (Fig. 7) wird die Bewegung auf die Düsenleiste 24 übertragen. Wenn der Mitnehmer 112 über die Antriebsrolle 78 geleitet wird, verschiebt er sich mit dem Gleitstück 86 entlang der Gleitstangen 110 und beginnt die Verschiebung nach rechts in Richtung des Pfeils 138. Derart kann die Bewegungsrichtung der Düsenleiste 24 mit einer kontinuierlichen Antriebsbewegung umgekehrt werden.

Beim Annähern an den linken Scheitelpunkt schiebt der Nocken 72 den linken Anschlagring 122 der Aussenhülse 118 der Schaltstange 66 nach links, das Ventilrad 130 rollt unter Oeffnung des Wasserventils 68 in eine Ringnut 140. Bei der Bewegung nach rechts wird der Plattenwärmeaustauscher 10 mit wenig aufbereitetem Wasser besprüht.

Erreicht der Mitnehmer 112 mit dem Gleitstück 86 die rechte Umlenkrolle 82, erfolgt eine analoge Bewegungsumkehr der Düsenleiste 24. Gleichzeitig wird die Aussenhülse 118 durch den am rechten Anschlagring 120 anlegenden Nocken 72 angehoben, unter Mitnahme des linken Anschlagrings 122. Dadurch rollt das Ventilrad 130 wieder aus der Ringnut 140, die Spiralfeder 132 kann das Wasserventil 68 schliessen. Die Rückwärtsbewegung erfolgt ohne Besprühen.

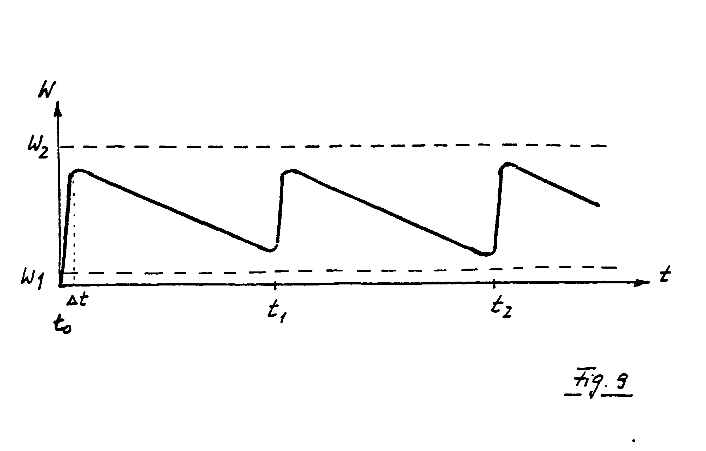

In Fig. 9 ist der zeitliche Ablauf des Feuchtigkeitsgehalts eines Flächenelementes qualitativ dargestellt. Zum Zeitpunkt t₀ ist das Flächenelement trocken. Dann wird während einer Zeit Δ t von wenigen Sekunden aufbereitetes Wasser aufgesprüht, welches die Flächenelemente vollständig benetzt. Der Wassergehalt W erreicht eine Spitze. Diese liegt jedoch unter der Tropfgrenze W₂, es darf kein aufgesprühtes Wasser abtropfen. Nach dem Besprühen trocknet das Flächenelement kontinuierlich, bis sie beim Zeitpunkt t₁ wieder besprüht wird. Die Zeitintervalle t₁, t₂-t₁ ..., tₙ-tₙ₋₁ dauern beispielsweise jeweils 8 min. Das nächste Besprühen erfolgt immer vor dem Erreichen eines festgelegten Feuchtigkeitsminimums W₁. Der Zyklus wird bis zum Ende der Kühlperiode fortgesetzt.

## Patentansprüche

1. Verfahren zum Kühlen und Reinigen der Flächenelemente (52) eines Plattenwärmeaustauschers (10) zur Rückgewinnung von Abluftwärme mittels Benetzungsdüsen (38), welche in gleichen Zeitintervallen (t₁) stromauf einen feinen Sprühstahl (42) von aufbereitetem Wasser in die Abluft-Strömungskanäle (54) des Plattenwärmeaustauschers (10) sprühen, wobei kein aufgesprühtes Wasser abtropft und die abluftbestrichenen Flächenelemente (52) bis zum nächsten Besprühen feucht bleiben, und mittels Ausschwemmdüsen (40), welche am Ende einer täglichen Kühlperiode stromauf einen Sprühstrahl (26) von Leitungswasser in die Abluft-Strömungskanäle (54) des Plattenwärmeaustauschers (10) sprühen.

2. Verfahren nach Anspruch 1, dadurch gekennzeichnet, dass mit den Benetzungsdüsen (38) enthärtetes, entsalztes oder entionisiertes Wasser aufgetragen wird.

3. Verfahren nach Anspruch 1 oder 2, dadurch gekennzeichnet, dass das Benetzungs- und das Ausschwemmwasser als Flachstrahl, vorzugsweise mit einem Spritzwinkel (α, β) von 25-130°, aufgesprüht wird.

4. Verfahren nach einem der Ansprüche 1 bis 3, dadurch gekennzeichnet, dass das aufbereitete Benetzungswasser bei einem Spritzwinkel (α) von etwa 110° bei 1-3 bar mit einem Volumenstrom von 0,1-1 1/min, das Ausschwemmwasser beim gleichen Spritzwinkel (β) mit einem Volumenstrom von 2-10 l/min aufgespritzt wird.

5. Verfahren nach einem der Ansprüche 1 bis 4, dadurch gekennzeichnet, dass das Benetzungswasser mit einem Zeitintervall (t₁) von 2-15 min, vorzugsweise von 5-10 min, aufgesprüht wird.

6. Verfahren nach einem der Ansprüche 1 bis 5, dadurch gekennzeichnet, dass das Ausschwemmwasser wenigstens zeitweise erwärmt und/oder ein alkalifreies Waschmittel zugegeben wird.

7. Verfahren nach einem der Ansprüche 1 bis 6, dadurch gekennzeichnet, dass der flache Sprühstral (42,26) von Benetzungs- (38) und Ausschwemmdüsen (40) beide Flächenelemente eines Abluft-Strömungskanals (54) jederzeit etwa gleich stark beaufschlagt.

8. Verfahren nach einem der Ansprüche 1 bis 7, dadurch gekennzeichnet, dass die Benetzung der Flächenelemente durch Aufrauhen und/oder eine Beschichtung, insbesondere eine hydrophile Lackschicht auf deren Oberfläche, verbessert wird.

9. Benetzungseinrichtung (48) zur Durchführung des Verfahrens nach einem der Ansprüche 1 bis 8, dadurch gekennzeichnet, dass die Benetzungseinrichtung (48) eine hin- und herbewegbare Düsenleiste (24) mit senkrecht zu ihrer Bewegungsebene angeordneten Benetzungs- (38) und Ausschwemmdüsen (40), separate Speiseleitungen (98, 104) für die beiden Düsensysteme, Führungsmittel (64) und ein Antriebsorgan (80) für die Düsenleiste (24) umfasst, wobei Mittel zur Betätigung und Regelung der Wasserzufuhr vorgesehen sind.

10. Benetzungseinrichtung (48) nach Anspruch 9, dadurch gekennzeichnet, dass die auf einer Gleitschiene (64) gelagerte Düsenleiste (24) auf der gleichen Ebene angeordnete Achsen von Benetzungsdüsen (38) und Ausschwemmdüsen (40) hat, welche Düsen (38,40) vorzugsweise einzeln auswechselbar sind.

11. Benetzungseinrichtung (48) nach Anspruch 9 oder 10, dadurch gekennzeichnet, dass die Benetzungsdüsen (38) einen äquivalenten Bohrungsdurchmesser von 0,5-0,8 mm, die Ausschwemmdüsen (40) einen solchen von 1,3-2 mm haben.

12. Benetzungseinrichtung (48) nach einem der Ansprüche 9 bis 11, dadurch gekennzeichnet, dass die Düsenleiste (24) ein auf einer Antriebs- (78) und einer Umlenkrolle (82) geführtes, flexibles Antriebsorgan (80) hat, vorzugsweise eine Kette.

13. Benetzungseinrichtung (48) nach Anspruch 12, dadurch gekennzeichnet, dass eine Schaltstange (66) mit dem Wasserventil (68) für die Benetzungsdüsen (38) in Eingriff steht, welche diese im Rücklauf mechanisch abschaltet.

14. Benetzungseinrichtung (48) nach einem der Ansprüche 9 bis 13, dadurch gekennzeichnet, dass im Zuluftstrom (22) für einen zu kühlenden Raum (34) ein Temperaturfühler (23) angeordnet ist, welcher beim Ueberschreiten einer einstellbaren Temperatur den Benetzungszyklus startet.

## Claims

1. Process for cooling and cleaning the planar elements (52) of a plate heat exchanger (10) to recover extraction air heat by means of wetting nozzles (38) which at equal time intervals (t₁) spray a fine spray jet (42) of treated water upstream into the extraction air flow channels (54) of the plate heat exchanger (10), where no sprayed water drips and the planar elements (52) coated by the extraction air remain damp until the next spraying, and by means of flushing nozzles (40) which at the end of a daily cooling period spray a spray jet (26) of tap water upstream into the extraction air flow channels (54) of the plate heat exchanger (10).

2. Process according to claim 1, characterised in that softened, desalinated or deionised water is applied by the wetting nozzles (38).

3. Process according to claim 1 or 2, characterised in that wetting and flushing water is sprayed as a flat jet, preferably with a spray angle (α, β) of 25 - 130°.

4. Process according to any of claims 1 to 3, characterised in that at a spray angle (α) of approx 110° at 1 - 3 bar, the treated wetting water is sprayed with a volume flow of 0.1 to 1 l/min, at the same spray angle (β), the flushing water is sprayed at a volume flow of 2 - 10 l/min.

5. Process according to any of claims 1 to 4, characterised in that the wetting water is sprayed with a time interval (t₁) of 2 - 15 min, preferably 5 - 10 min.

6. Process according to any of claims 1 to 5, characterised in that for at least part of the time, the flushing water is heated and/or an alkali-free washing agent is added.

7. Process according to any of claims 1 to 6, characterised in that the flat spray jet (42, 46) of the wetting (38) and flushing (40) nozzles contacts the two planar elements of an extraction air flow channel (54) with approximately the same force each time.

8. Process according to any of claims 1 to 7, characterised in that the wetting of the planar element is improved by roughening and/or a coating, in particular a hydrophilic paint coating on the surface.

9. Wetting device (48) for performance of the process according to any of claims 1 to 8, characterised in that the wetting device (48) comprises a reciprocating movement nozzle rail (24) with the wetting (38) and flushing nozzles (40) arranged perpendicular to its plane of movement, separate supply lines (98, 104) for the two nozzle systems, guide means (64) and a drive element (80) for the nozzle rail (24), where means are provided for activating and controlling the water supply.

10. Wetting device (48) according to claim 9, characterised in that the nozzle rail (24) mounted on a slide rail (64) has the axes of the wetting nozzles (38) and flushing nozzles (40) arranged on the same plane, where the nozzles (38, 40) can preferably be exchanged individually.

11. Wetting device (48) according to claim 9 or 10, characterised in that the wetting nozzles (38) have an equivalent bore diameter of 0.5 - 0.8 mm, and the flushing nozzles (40) a diameter of 1.3 - 2 mm.

12. Wetting device (48) according to any of claims 9 to 11, characterised in that the nozzle rail (24) has a flexible drive element (80), preferably a chain, guided on a drive (78) and a deflecting (82) roller.

13. Wetting device (48) according to claim 12, characterised in that a switch rod (66) is connected to the water valve (68) for the wetting nozzles (38) and switches these off mechanically on the return.

14. Wetting device (48) according to any of claims 9 to 13, characterised in that in the supply air flow (22) for a room (34) to be cooled is arranged a temperature sensor (23) which starts the wetting cycle when a specifiable temperature is exceeded.

## Revendications

1. Procédé de refroidissement et de nettoyage des surfaces élémentaires (52) d'un échangeur de chaleur (10) à plaques, destiné à récupérer de la chaleur contenue dans de l'air d'évacuation, au moyen d'injecteurs de mouillage (38), qui pulvérisent à intervalles de temps égaux (t₁) un fin jet de pulvérisation (42) d'eau préparée en direction de l'amont dans les canaux d'écoulement (54) d'air d'évacuation de l'échangeur de chaleur (10) à plaques d'une manière telle qu'aucune eau pulvérisée ne s'égoutte et que les surfaces élémentaires (52) léchées par l'air d'évacuation restent humides jusqu'à la pulvérisation suivante, et au moyen d'injecteurs de rinçage (40) qui pulvérisent à la fin d'une période quotidienne de refroidissement un jet de pulvérisation (26) d'eau de distribution en direction de l'amont dans les canaux d'écoulement (54) d'air d'évacuation de l'échangeur de chaleur (10) à plaques.

2. Procédé selon la revendication 1, caractérisé en ce que c'est de l'eau adoucie, dessalée ou désionisée qui est appliquée au moyen des injecteurs de mouillage (38).

3. Procédé selon la revendication 1 ou 2, caractérisé en ce que l'eau de mouillage et l'eau de rinçage sont pulvérisées sous forme de jet plat, de préférence selon un angle de projection (α, β) de 25 à 130°.

4. Procédé selon l'une quelconque des revendications 1 à 3, caractérisé en ce que l'eau de mouillage préparée est projetée selon un angle de projection (α) d'environ 110° à 1 à 3 bars à un débit volumique de 0,1 à 1 l/minute, et l'eau de rinçage est projetée selon le même angle de projection (β) à un débit de 2 à 10 l/minute.

5. Procédé selon l'une quelconque des revendications 1 à 4, caractérisé en ce que l'eau de mouillage est pulvérisée à des intervalles de temps (t₁) de 2 à 15 minutes, de préférence de 5 à 10 minutes.

6. Procédé selon l'une quelconque des revendications 1 à 5, caractérisé en ce que l'eau de rinçage est au moins temporairement chauffée et/ou qu'un moyen de lavage exempt d'alcalis y est ajouté.

7. Procédé selon l'une quelconque des revendications 1 à 6, caractérisé en ce que le jet de pulvérisation plat (42, 26) des injecteurs de mouillage (38) et de rinçage (40) est appliqué chaque fois selon une force d'impact à peu près égale aux deux surfaces élémentaires d'un canal d'écoulement (54) d'air d'évacuation.

8. Procédé selon l'une quelconque des revendications 1 à 7, caractérisé en ce que le mouillage des surfaces élémentaires est amélioré en rendant rugueuse leur surface et/ou en y appliquant un revêtement, en particulier une couche de laque hydrophile.

9. Installation de mouillage (48) pour mettre en oeuvre le procédé selon l'une quelconque des revendications 1 à 8, caractérisée en ce que l'installation de mouillage (48) comporte une barre (24) d'injecteurs mobile à va et vient pourvue d'injecteurs de mouillage (38) et de rinçage (40) agencés perpendiculairement à son plan de déplacement, des conduites d'alimentation séparées (98, 104) pour les deux systèmes d'injecteurs, des moyens de guidage (64) et un organe d'entraînement (80) pour la barre (24) d'injecteurs, et que des moyens sont prévus pour la manoeuvre et le réglage de l'amenée d'eau.

10. Installation de mouillage (48) selon la revendication 9, caractérisée en ce que la barre (24) d'injecteurs logée sur une coulisse (64) comporte des axes, agencés dans le même plan, d'injecteurs de mouillage (38) et d'injecteurs (40) de rinçage, injecteurs (38, 40) qui sont de préférence interchangeables individuellement.

11. Installation de mouillage (48) selon la revendication 9 ou 10, caractérisée en ce que le diamètre équivalent d'alésage des injecteurs de mouillage (38) est de 0,5 à 0,8 mm et celui des injecteurs de rinçage (40) est de 1,3 à 2 mm.

12. Installation de mouillage (48) selon l'une quelconque des revendications 9 à 11, caractérisée en ce que la barre (24) d'injecteurs comporte un organe d'entraînement flexible (80), de préférence une chaîne, guidé sur un rouleau d'entraînement (78) et un rouleau (82) de changement de direction.

13. Installation de mouillage (48) selon la revendication 12, caractérisée en ce qu'une tige de commutation (66), qui commute mécaniquement hors service les injecteurs de mouillage (38) pour le trajet de retour, est en prise avec la vanne d'eau (68) de ces injecteurs.

14. Installation de mouillage (48) selon l'une quelconque des revendications 9 à 13, caractérisée en ce qu'un capteur de température (23), qui lance le cycle de mouillage lorsqu'une température réglable est dépassée, est agencé dans le courant d'air d'entrée (22) pour un espace (34) à refroidir.
